(19) Europäisches Patentamt
European Patent Office
Office européen des brevets

(11) Veröffentlichungsnummer: **0 340 546 A2**

# (12) EUROPÄISCHE PATENTANMELDUNG

(21) Anmeldenummer: **89107103.7**

(51) Int. Cl.4: **C08L 71/04 , C08L 51/08**

(22) Anmeldetag: **20.04.89**

(30) Priorität: **03.05.88 DE 3814973**

(43) Veröffentlichungstag der Anmeldung:
**08.11.89 Patentblatt 89/45**

(84) Benannte Vertragsstaaten:
**DE FR GB IT**

(71) Anmelder: **BAYER AG**

**D-5090 Leverkusen 1 Bayerwerk(DE)**

(72) Erfinder: **Wittmann, Dieter, Dr.**
**Wolfskaul 4**
**D-5000 Köln 80(DE)**
Erfinder: **Eckel, Thomas, Dr.**
**Gneisenaustrasse 15a**
**D-4047 Dormagen(DE)**
Erfinder: **Ott, Karl-Heinz**
**Paul-Klee-Strasse 54**
**D-5090 Leverkusen(DE)**
Erfinder: **Damrath, Volker, Dr.**
**Dierath 26**
**D-5093 Burscheid(DE)**
Erfinder: **Westeppe, Uwe, Dr.**
**Yorckstrasse 19**
**D-5630 Remscheid 11(DE)**

## (54) Polyphenylenether-Formmassen.

(57) Thermoplastische Formmassen aus Polyphenylenether, einem Pfropfpolymerisat harzbildender Monomerer auf Siliconkautschuk und gegebenenfalls einem harzartigen Thermoplasten sowie ein Verfahren zu ihrer Herstellung und ihre Verwendung zur Erzeugung von Formteilen.

EP 0 340 546 A2

Xerox Copy Centre

# Polyphenylenether-Formmassen

Die Erfindung betrifft thermoplastische Formmassen aus:

A. 1-99 Gew.-Teilen, vorzugsweise 20-95 Gew.-Teilen, besonders bevorzugt 40-90 Gew.-Teilen, eines harzartigen Polyphenylenethers, vorzugsweise Poly-(2,6-dimethyl-1,4-phenylen)-ether

B. 1-99 Gew.-Teilen, vorzugsweise 5-80 Gew.-Teilen, besonders bevorzugt 10-60 Gew.-Teilen, eines Pfropfpolymerisats von

B.1 5-90 Gew.-%, vorzugsweise 30-80 Gew.-%, besonders bevorzugt 55 bis 70 Gew.-%, eines Gemisches aus

B.1.1 60-100 Gew.-%, vorzugsweise 90-100 Gew.-%, besonders bevorzugt 95 bis 100 Gew.-%, alkenylaromatischer Verbindung, vorzugsweise Styrol, und

B.1.2 0-40 Gew.-%, vorzugsweise 0-10 Gew.-%, besonders bevorzugt 0-5 Gew.-%, α,ß-ungesättigter, mit B.1.1 copolymerisierbarer Verbindung, vorzugsweise Maleinsäureanhydrid, Acrylnitril, Methacrylnitril, $C_1$-$C_8$-Alkylacrylat, $C_1$-$C_8$-Alkylmethacrylat auf

B.2 10-95 Gew.-%, vorzugsweise 20-70 Gew.-%, besonders bevorzugt 30 bis 45 Gew.-%, Silikonkautschuk mit einem mittleren Teilchendurchmesser $d_{50}$ von 0,05-1 µm, vorzugsweise 0,09-0,4 µm, und einem Gelgehalt von mehr als 50 Gew.-%, vorzugsweise mehr als 70 Gew.-%, insbesondere 73 bis 98 Gew.-%, erhältlich aus

a. Dihalogendiorganosilan,

b. 0-10 Mol-%, bezogen auf a., Trihalogenorganosilan,

c. 0-3 Mol-%, bezogen auf a., Tetrahalogensilan und

d. 0-0.5 Mol-%, bezogen auf a., Halogentriorganosilan, wobei die Organylreste der Verbindungen a., b. und d.

α. $C_1$-$C_6$-Alkyl oder Cyclohexyl, vorzugsweise Methyl, Ethyl,

ß. $C_6$-$C_{12}$-Aryl, vorzugsweise Phenyl,

γ. $C_1$-$C_6$-Alkenyl, vorzugsweise Vinyl, Allyl,

δ. Mercapto-$C_1$-$C_6$-alkyl, vorzugsweise Mercaptopropyl,

bedeuten mit der Maßgabe, daß 2-10 Mol-% aller Organylreste in den Verbindungen a), b) und d) der Formel $\gamma + \delta$ entsprechen und das Molverhältnis der Reste $\gamma:\delta$ 3:1 bis 1:3, vorzugsweise 2:1 bis 1:2 ist und

C. pro 100 Gew.-Teile A + B, 0-80 Gew.-Teile, vorzugsweise 0-50 Gew.-Teile eines thermoplastischen Polymerisats aus

C.1 60-100 Gew.-%, vorzugsweise 90-100 Gew.-%, besonders bevorzugt 95 bis 100 Gew.-%, alkenylaromatischer Verbindung, vorzugsweise Styrol, und

C.2 0-40 Gew.-%, vorzugsweise 0-10 Gew.-%, besonders bevorzugt 0-5 Gew.-%, α,ß-ungesättigter, mit C.1 copolymerisierbarer Verbindung, vorzugsweise Maleinsäureanhydrid, Acrylnitril, Methacrylnitril, $C_1$-$C_8$-Alkylmethacrylat, $C_1$-$C_8$-Alkylacrylat.

Die Verbesserung der Schlagzähigkeit von Polyphenylenetherharzen durch Zusatz bestimmter Elastomerer ist bekannt.

So werden in der US-PS 3 383 435 Mischungen aus Polyphenylenethern und kautschukmodifizierten Styrolpolymerisaten beschrieben, deren Kautschukkomponente ein ungesättigtes Polymerisat, z.B. Polybutadien, enthält.

Gemäß der US-PS 3 658 945 und der US-PS 3 943 191 werden zur Verbesserung der Schlagfestigkeit von Polyphenylenethern gegebenenfalls mit Styrolpolymerisaten modifizierte EPDM-Kautschuke vorgeschlagen.

In der US-PS 3 737 479 werden Mischungen aus Polyphenylenethern und Polysiloxanen beschrieben.

Die DE-OS 2 947 421 beschreibt Mischungen von Polyphenylenethern und polysiloxanmodifizierten Polyalkenylaromaten, die sich durch gute Schlagfestigkeit, gute Verarbeitbarkeit und thermische Stabilität auszeichnen.

Gemäß DE-OS 2 659 357 besitzen Formmassen aus thermoplastischen Harzen, wie Polyphenylenether, und Pfropfcopolymerisaten auf Polysiloxane oder Silikonkautschuke gute Schlagzähigkeit auch bei tiefen Temperaturen.

Die Zähigkeit aller dieser Polyphenylenether-Formmassen ist jedoch für eine Reihe von Anwendungen noch nicht zu friedenstellend, insbesondere nicht für die Herstellung von Kraftfahrzeug-Außenteilen.

Es wurde gefunden, daß die eingangs definierten erfindungsgemäßen Formmassen aus Polyphenylenetherharzen und speziellen Pfropfpolymerisaten, gegebenenfalls Alkenylaromat(co)polymerisaten und üblichen Hilfs- und Zusatzstoffen gleichzeitig hervorragende Zähigkeit und Witterungsstabilität besitzen.

Erfindungsgemäß geeignete Polyphenylenether (Komponente A) weisen die Formel I auf.

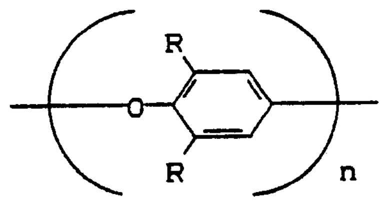

I

worin

das Ethersauerstoffatom einer Einheit jeweils mit dem aromatischen Kern der benachbarten Einheit verbunden ist, n eine positive ganze Zahl ≧ 50 ist und jedes R für Wasserstoff, Halogen, Kohlenwasserstoffreste ohne tertiäres α-Kohlenstoffatom, Halogenkohlenwasserstoffreste mit wenigstens zwei Kohlenstoffatomen zwischen dem Halogenatom und dem Phenylkern, Kohlenwasserstoffoxyreste und Halogenkohlenwasserstoffoxyreste mit wenigstens zwei Kohlenstoffatomen zwischen dem Halogenatom und dem Phenylkern, stehen. Polyphenylenether, die der obengenannten Formel entsprechen, sowie ihre Herstellung durch katalysierte oxidative Kupplung aus Phenolen, Metallaminkomplexkatalysatoren und sauerstoffhaltigem Gas, werden in den US-Patenten 3 306 874, 3 306 875, 3 257 357 und 3 257 358 beschrieben.

Als Komponente A bevorzugt ist Poly(2,6-dimethyl-1,4-phenylen)-ether.

Pfropfpolymerisate B im Sinne der Erfindung sind solche, deren Pfropfhülle B.1 überwiegend aus polymerisierten alkenylaromatischen Verbindungen B.1.1 gemäß Formel II aufgebaut ist,

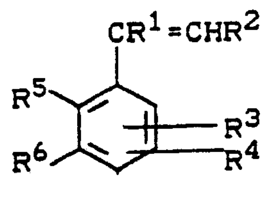

II

worin

$R^1$ und $R^2$ für Wasserstoff, $C_1$-$C_6$-Alkyl und $C_2$-$C_6$-Alkenyl, $R^3$ und $R^4$ für Chlor, Brom, Wasserstoff und $C_1$-$C_6$-Alkyl und $R^5$ und $R^6$ für Wasserstoff, $C_1$-$C_6$-Alkyl- und $C_2$-$C_6$-Alkenyl, stehen und $R^5$ und $R^6$ auch über Kohlenwasserstoffreste miteinander verbunden sein (und z.B. eine Naphthylgruppe bilden) können.

Beispiele für alkenylaromatische Verbindungen sind Styrol, Bromstyrol, Chlorstyrol, α-Methylstyrol, Vinylxylol, Divinylbenzol, Vinylnaphthalin und Vinyltoluol,

Bevorzugte Komponente B.1.1 ist Styrol.

Daneben kann die Pfropfhülle B.1 noch weitere, mit B.1.1. copolymerisierbare α,β-ungesättigte Monomere B.1.2 enthalten, z.B. Anhydride ungesättiger Carbonsäuren, Alkenylcyanide, $C_1$-$C_8$-Alkylacrylate und $C_1$-$C_8$-Alkylmethacrylate. Bevorzugt sind Maleinsäureanhydrid, Acrylnitril, Methacrylnitril, Methylmethacrylat, n-Butylacrylat, t-Butylacrylat und t-Butylmethacrylat. Die Pfropfhülle B.1 soll zu mindestens 60 Gew.-%, vorzugsweise zu mindestens 90 Gew.-%, besonders bevorzugt zu mindestens 95 Gew.-%, aus den alkenylaromatischen Verbindungen B.1.1 aufgebaut sein.

Die Pfropfgrundlage B.2 ist ein teilchenförmiger Silikonkautschuk mit einem mittleren Teilchendurchmesser von 0,05-1 µm, vorzugsweise 0,09-0,4 µm, und einem Gelgehalt von mehr als 50 Gew.-%, vorzugsweise mehr als 70 Gew.-%, insbesondere 73-98 Gew.-%.

Der mittlere Teilchendurchmesser $d_{50}$ ist der Durchmesser, oberhalb und unterhalb dessen jeweils 50 Gew.-% der Teilchen liegen. Er kann mittels Ultrazentrifugenmessungen (W. Scholtan, H. Lange, Kolloid. Z. und Z. Polymere 250 (1972) 782-796) bestimmt werden.

Der Gelgehalt wird bei 25 °C in Aceton bestimmt; vergleiche DE-PS 2 421 288, Sp. 7, Z. 17-37.

Bevorzugte Silikonkautschuke B.2 sind solche, deren Organylreste zu mindestens 80 Mol-% aus Methylgruppen bestehen.

Als Endgruppe fungiert im allgemeinen eine Diorganylhydroxysiloxy-Einheit, vorzugsweise eine Dimethylhydroxysiloxy-Einheit.

Für die Herstellung der Silikonkautschuke B.2 bevorzugte Silane a bis d enthalten als Halogensubstituenten vorzugsweise Chlor.

"Erhältlich" im Sinne der Erfindung bedeutet, daß der Silikonkautschuk B.2 nicht unbedingt aus den Halogenverbindungen a-d hergestellt werden muß. Die Definition umfaßt vielmehr auch Silikonkautschuke B.2 gleicher Struktur, die aus Silanen mit anderen hydrolysierbaren Gruppen, wie z.B. $C_1$-$C_6$-Alkoxygruppen, hergestellt worden sind.

Bei der Herstellung der Pfropfpolymerisate B durch Pfropfcopolymerisation bilden sich im allgemeinen neben dem eigentlichen Pfropfcopolymerisat in bestimmtem Ausmaß auch freie Polymerisate bzw. Copolymeriste der die Pfropfhülle bildenden Pfropfmonomeren.

Pfropfpolymerisate B im Sinne der Erfindung sind deshalb durch Polymerisation der Pfropfmonomeren B.1 in Gegenwart des Silikonkautschuks B.2 erhaltene Produkte, genau genommen also im allgemeinen ein Gemisch aus Pfropfcopolymerisat und freiem (Co-)Polymerisat der Pfropfmonomeren B.1.

Die Pfropfpolymerisate B können durch radikalische Pfropfpolymerisation, z.B. analog DE-PS 2 421 288. hergestellt werden, z.B. nach folgendem Verfahren:

Zunächst wird in einer ersten Stufe durch Emulsionspolymerisation eines Silikonoligomeren der Silikonkautschuk B.2 hersgestellt, hierfür bevorzugt sind cyclische Silikonoligomere, wie z.B. Octamethylcyclotetrasiloxan.

Die Herstelung einer Emulsion eines langkettigen OH-terminierten Silikonöls durch Emulsionspolymerisation ist dem Fachmann im Prinzip bekannt. Beispielhaft wird hierzu auf die US-PS 2 891 910 sowie auf die GB-PS 1 024 024 verwiesen. Besonders bevorzugt ist das in der britischen Patentschrift offenbarte Verfahren, eine Alkylbenzolsulfonsäure einzusetzen, da hier Emulgator und Polymerisationskatalysator in einem vorliegen. Nach erfolgter Polymerisation wird die Säure neutralisiert.

Dementsprechend kann die Emulgatorkonzentration gering gehalten werden, und man hat nach Fertigstellung der Emulsion wenig störende Fremdmoleküle aus dem Katalysator in dem fertigen Produkt. Anstelle der genannten Alkylbenzolsulfonsäuren können aber auch n-Alkylsulfonsäuren eingesetzt werden. Es ist weiterhin möglich, neben der katalytisch wirksamen Sulfonsäure auch zusätzlich Co-Emulgatoren einzusetzen.

Derartige Co-Emulgatoren können nichtionischer sowie anionischer Natur sein. Als anionische Co-Emulgatoren kommen insbesondere Salze der obengenannten n-Alkyl-oder Alkylbenzolsulfonsäuren in Frage. Nichtionogene Co-Emulgatoren sind Polyoxyethylenderivate von Fettalkoholen und Fettsäuren. Beispiele für derartige Emulgiermittel sind POE (3)-Laurylalkohol, POE (20)-Oleylalkohol, POE (7)-Nonylphenol oder POE (10)-Stearat (die Schreibweise POE (x)-Laurylalkohol bedeutet, daß an ein Molekül Laurylalkohol x Einheiten Ethylenoxid addiert worden sind, wobei die Zahl x einen Mittelwert darstellt).

Im allgemeinen sind Silikonöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichtes des bei der Emulsionspolymerisation entstehenden OH-terminierten Silikonöls erfolgt z.B. über die Temperatur bei der Gleichgewichtsbildung zwischen Siloxan, Wasser und dem durch Ringöffnung des Siloxans zunächst gebildeten Silanols (bezüglich Einzelheiten zum Zusammenhang zwischen Tem peratur und Molekulargewicht wird auf D.R. Weyenberg et al., J. Polym. Sci., Part C, 27, S. 28 bis 34 (1969) verweisen).

Die Gruppen $\gamma$ und $\delta$ können in das Silikonpolymer durch Arbeiten in Anwesenheit geeigneter Siloxanoligomerer eingefügt werden. Geeignete Ausgangsoligomere sind z.B. Tetramethyltetravinylcyclotetrasiloxan oder $\gamma$-Mercaptopropylmethyldimethoxysilan oder dessen Hydrolysat.

Diese funktionellen Oligomeren werden dem Hauptoligomer, z.B. Octamethylcyclotetrasiloxan, in den gewünschten Mengen beigefügt.

Analog können auch längerkettige Alkylreste, wie Ethyl, Propyl und Phenylgruppen eingebaut werden.

Eine ausreichende Vernetzung des Silikonkautschuks kann schon erreicht werden, wenn die Reste $\gamma$ und $\delta$ bei der Emulsionspolymerisation miteinander reagieren, so daß die Zugabe eines externen Vernetzers entbehrlich sein kann. Jedoch kann ein Vernetzung bewirkendes Silan zugefügt werden, um den Vernetzungsgrad des Silikonkautschuks zu erhöhen.

Verzweigungen oder Vernetzungen können durch Zugabe von z.B. Tetraethoxysilan oder eines Silans der allgemeinen Formel Organyl-$SiX_3$, wobei X eine hydrolysierbare Gruppe, insbesondere den Alkoxyrest, darstellt, erzielt werden. Insbesondere bevorzugt sind neben Tetraethoxysilan Methyltrimethoxysilan und Phenyltrimethoxysilan.

Die Pfropfgrundlage B.2 kann auch ein Polymerisat mit "Kern/Mantel"-Struktur sein. Zu deren Herstellung kann man in Gegenwart eines Silikonkautschuk-Latex ("Kern") durch Emulsionspolymerisation einen Acrylatkautschuk ("Mantel") erzeugen. Hierzu emulgiert man Alkylacrylat in dem Silikonkautschuk-Latex und polymerisiert in an sich bekannter Weise mit radikalbildenden Initiatoren. Der Acrylatkautschuk polymerisiert auf den Silikonkautschuk und bildet eine Hülle um die Silikonkautschukteilchen. Er kann durch Mitverwendung polyfunktioneller Monomere bereits bei der Herstellung vernetzt werden. Bei der Pfropfpolymerisation

des Acrylatkautschuk-Mantels muß die Bildung neuer Teilchen möglichst vollständig unterbunden werden, d.h., der Emulgator muß in einer zur Oberflächenbedeckung der Teilchen gerade ausreichenden Menge vorhanden sein. Bei der Bildung des Acrylatkautschuk-Mantels können die Alkylacrylate ganz oder teilweise durch andere Monomeren, wie Isopren, Butadien, Chloropren, Ethylen, falls erforderlich unter Zusatz von vernetzenden, polyfunktionellen Monomeren, wie Divinylbenzol, Triallylcyanurat, ersetzt werden.

Ein Kern/Mantel-Kautschukteilchen kann aber auch eine zu obengenannter Ausführung "inverse" Struktur besitzen, d.h., um einen kautschukelastischen Kern, z.B. aus vernetztem Acrylatkautschuk, kann ein vorzugsweise vernetzter Silikonkautschuk-Mantel erzeugt werden. Die Alkylacrylate können auch hier ganz oder teilweise durch andere, kautschukbildende Monomere, wie Isopren, Butadien, Chloropren, Ethylen, und gegebenenfalls ver netzende Monomere, wie Divinylbenzol, Triallylcyanurat, ersetzt werden.

Es ist auch möglich, auf Kautschukelastizität im Kern völlig zu verzichten, d.h., dieser kann ein beliebiges thermoplastisches Polymerisat (sofern es durch Emulsionspolymerisation mit geeigneter Teilchengröße herstellbar ist), wie Polypropylen, Styrol-Acrylnitril-Copolymerisat, Polymethylmethacrylat sein. Dieser thermoplastische Kern wird dann von einem vernetzten Silikonkautschuk-Mantel umgeben.

Zur Herstellung des Pfropfcopolymerisates B können die Pfropfmonomeren B.1.1 und B.1.2 in Anwesenheit des Silikonkautschuks B.2 (inklusive der oben erwähnten Kern/Mantel-Varianten) radikalisch pfropfpolymerisiert werden, insbesondere bei 40-90 °C. Die Pfropfpolymerisation kann in Suspension, Dispersion oder Emulsion durchgeführt werden. Bevorzugt ist die kontinuierliche oder diskontinuierliche Emulsionspfropfpolymerisation. Diese Pfropfpolymerisation wird unter Einsatz von Radikalinitiatoren durchgeführt z.B. Peroxide, Azoverbindungen, Hydroperoxide, Persulfate, Perphosphate) und gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h., ein großer Anteil des Polymerisates der Monomeren B.1 wird an den Silikonkautschuk B.2 chemisch gebunden. Dieser besondere Silikonkautschuk B.2 macht besondere Maßnahmen (die eine hohe Pfropfung ermöglichen) überflüssig.

Die so hergestellten Pfropfpolymerisate B können nach bekannten Verfahren aufgearbeitet werden, z.B. durch Koagulation der Latices mit wäßrigen Elektrolyten (Salzen, Säuren oder Gemische davon) und anschließende Reininigung und Trocknung.

Die erfindungsgemäßen Formmassen enthalten 1-99 Gew.-Teile, vorzugsweise 20-95 Gew.-Teile, besonders bevorzugt 40-90 Gew.-Teile der Komponente A sowie 1-99 Gew.-Teile, vorzugsweise 5-80 Gew.-Teile, besonders bevorzugt 10-60 Gew.-Teile der Komponente B.

Daneben können, pro 100 Gew.-Teilen A + B, bis zu 80 Gew.-Teile, vorzugsweise bis zu 50 Gew.-Teile, eines thermoplastischen kautschukfreien Polymerisats C darin enthalten sein, das überwiegend aus alkenylaromatischen Verbindungen C.1 aufgebaut ist, und maximal 40 Gew.-%, vorzugsweise maximal 10 Gew.-%, besonders bevorzugt maximal 5 Gew.-%, weitere, mit C.1 copolymerisierbare Verbindungen C.2 enthalten kann. Die Monomeren gemäß C.1 entsprechen dabei den unter B.1.1, diejenigen gemäß C.2 den unter B.1.2 weiter oben aufgeführten.

Die erfindungsgemäß einsetzbare Menge an Komponente C bezieht die gegebenenfalls als Nebenprodukte bei der Herstellung von B. entstehenden freien, d.h. nicht gepfropften Harze gleicher Zusammensetzung (B.1) nicht ein. Bevorzugte Komponente C ist Polystyrol.

Die (Co)polymerisate C sind bekannt und lassen sich durch radikalische Polymerisation, insbesondere durch Emulsions-, Suspensions-, Lösungs- oder Massepolymerisation herstellen. Sie besitzen vorzugsweise Molekulargewichte $\overline{M}_w$ (Gewichtsmittel, ermittelt durch Lichtstreuung oder Sedimentation) zwiscnen 15 000 und 200 000.

Die erfindungsgemäßen Formmassen können weitere, für aromatische Polyester sowie Pfropfpolymerisate bekannte Zusätze, wie Stabilisatoren, Pigmente, Entformungsmittel, Flammschutzmittel, Füll- und Verstärkungsstoffe und Antistatika, in den übliche Mengen enthalten.

Die erfindungsgemäßen Formmassen können hergestellt werden, indem man die Bestandteile in bekannter Weise vermischt und bei erhöhten Temperaturen, vorzugsweise bei 200-350 °C, in üblichen Vorrichtungen, wie Innenknetern, Extrudern oder Doppelwellenschnecken, schmelzcompoundiert oder schmelzextrudiert. Die einzelnen Komponenten können nacheinander oder gleichzeitig gemischt werden.

Weiterer Gegenstand der Erfindung ist also ein Verfahren zur Herstellung der beschriebenen Formmassen durch Mischen der Komponenten bei erhöhter Temperatur.

Die erfindungsgemäßen Formmassen können zur Herstellung von Formkörpern jeder Art, z.B. durch Spritzgießen, verwendet werden. Beispiele für Formkörper sind: Gehäuseteile (z.B. für Haushaltsgeräte, wie Saftpressen, Kaffeemaschinen, Mixer), Abdeckplatten für das Baugewerbe, Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt

werden.

Weitere Gegenstand der Erfindung ist also die Verwendung der beschriebenen Formmassen zur Herstellung von Formkörpern.

## Beispiele

Eingesetzte Komponenten

### A. Polyphenylenether

Poly(2,6-dimethyl-1,4-phenylen)-ether mit einer relativen Viskosität $\eta_{rel}$ = 1,262, gemessen an einer 0,5 Gew.-%igen Lösung in Chloroform bei 25° C.

### B. Pfropfpolymerisate

1. Herstellung der Silikonkautschuk-Emulsion (erfindungsgemäße Grundlage B.2)

38,4 Tl. Octamethylcyclotetrasiloxan, 1,2 Tl. Tetramethyltetravinylcyclotetrasiloxan und 1 Tl. γ-Mercaptopropylmethyldimethoxysiloxan werden miteinander verrührt, 0,5 Tl. Dodecylbenzolsulfonsäure werden zugefügt, anschließend 58,4 Tl. Wasser innerhalb 1 h zugegeben. Dabei wird intensiv gerührt. Die Voremulsion wird mit Hilfe einer Hochdruckemulgiermaschine 2 mal bei 200 bar homogenisiert. Man gibt weitere 0,5 Tl. Dodecylbenzolsulfonsäure hinzu. Die Emulsion wird 2 h bei 85° C und anschließend 36 h bei 20° C gerührt. Neutralisiert wird mit Hilfe von 5 n-NaOH. Es resultiert eine stabile Emulsion mit einem Feststoffgehalt von ca. 36 Gew.-%, Das Polymer besitzt einen Gelgehalt von 82 Gew.-%, gemessen in Toluol; die mittlere Teilchengröße beträgt 300 nm.

2 Herstellung des erfindungsgemäßen Pfropfpolymerisats B.I

In einem Reaktor werden vorgelegt:
2107 Tl. Latex B.2 und
1073 Tl. Wasser

Nach Initiierung mittels einer Lösung von 7,5 Tl. Kaliumperoxydisulfat in 195 Tl. Wasser bei 65° C werden folgende Zuläufe in den Reaktor innerhalb von 4 h gleichmäßig eingespeist:

| | |
|---|---|
| Zulauf 1: | 759 Tl. Styrol |
| Zulauf 2: | Lösung von 15 Tl. Na-Salz von $C_{14}$-$C_{18}$-Alkylsulfonsäuren in 375 Tl. Wasser. |

Anschließend wird innerhalb von 6 h bei 65° C auspolymerisiert. Es resultiert ein Latex mit einem Feststoffgehalt von ca. 33 Gew.-%.

Nach Koagulation mit einer wäßrigen Magnesiumsulfat/Essigsäure-Lösung, Filtration und Trocknung im Vakuum wird das Pfropfpolymerisat in Form eines weißen Pulvers erhalten.

3 Pfropfpolymerisat B.II (Vergleich)

Pfropfpolymerisat von 50 Gew.-Tl, Styrol auf 50 Gew.-Tl. eines partiell vernetzten, grobteiligen Polybutadiens mit einem mittleren Teilchendurchmesser on 0,4 µm ($d_{50}$-Wert) und einem Gelgehalt von 79 Gew.-%, hergestellt durch Emulsionspolymerisation.

Herstellung und Prüfung der erfindungsgemäßen Formmassen

Die Komponenten A und B wurden in einem 1,3-l Innenkneter bei Temperaturen von 230 bis 240°C compoundiert.

Von den Formmassen wurden auf einer Spritzgußmaschine Stäbe der Abmessung 80x10x4 mm (Verarbeitungstemperatur 300° C) hergestellt, an denen die Kerbschlagzähigkeit (nach Methode ISO 180 1 A) bei RT, -30°C und -50°C bestimmt wurde.

Die Bestimmung der Wärmeformbeständigkeit erfolgte nach Vicat (Methode B) gemäß DIN 53 460.

Wie nachfolgende Tabelle zeigt, weisen die erfindungsgemäßen Formassen bei gleichem Gesamtkautschukgehalt ein deutlich höheres Niveau der Zähigkeit und Wärmeformbeständigkeit auf.

| Zusammensetzung und Eigenschaften der Formmassen | | | | | | | |
|---|---|---|---|---|---|---|---|
| | Komponenten | | | Kerbschlagzähigkeit ($kJ/m^2$) | | | Wärmeformbeständigkeit (°C) |
| | A | B.I | B.II | RT | -30°C | -50°C | |
| erfindungsgemäßes Beispiel | 60 | 40 | | 44,5 | 35,7 | 33,1 | 163 |
| Vergleichsbeispiel | 60 | | 40 | 8,0 | | | 144 |

**Ansprüche**

1. Thermoplastische Formmassen aus

A. 1-99 Gew.-Teilen eines harzartigen Polyphenylenethers

B. 1-99 Gew.-Teilen eines Pfropfpolymerisats von

B.1 5-90 Gew.-% eines Gemisches aus

B.1.1 60-100 Gew.-%, alkenylaromatischer Verbindung

B.1.2 0-40 Gew.-%, α,ß-ungesättigter, mit B.1.1. copolymerisierbarer Verbindung, auf

B.2 10-95 Gew.-% Silikonkautschuk mit einem mittleren Teilchendurchmesser $d_{50}$ von 0,05-1 µm und einem Gelgehalt von mehr als 50 Gew.-%, erhältlich aus

a. Dihalogendiorganosilan,

b. 0-10 Mol-%, bezogen auf a., Trihalogenorganosilan und

c. 0-3 Mol-%, bezogen auf a., Tetrahalogensilan und

d. 0-0,5 Mol-%, bezogen auf a., Halogentriorganosilan,

wobei die Organylreste der Verbindungen a., b. und d

α. $C_1$-$C_6$-Alkyl oder Cyclohexyl,

ß. $C_6$-$C_{12}$-Aryl,

γ. $C_1$-$C_6$-Alkenyl,

δ. Mercapto-$C_1$-$C_6$-alkyl,

bedeuten mit der Maßgabe daß 2-10 Mol-% aller Organylreste in den Verbindungen a), b) und d) der Formel γ-δ entsprechen und das Molverhältnis der Reste γ:δ 3:1 bis 1:3, vorzugsweise 2:1 bis 1:2 ist und

C. pro 100 Gew.-Teile A+B: 0-80 Gew.-Teilen eines thermoplastischen Polymerisats aus

C.1 60-100 Gew.-%, alkenylaromatischer Verbindung, und

C.2 0-40 Gew.-%, α,ß-ungesättigter, mit C.1 copolymerisierbarer Verbindung.

2. Formmassen gemäß Anspruch 1 auf Basis von 20-95 Gew.-Tl. der Komponente A und 5-80 Gew.-Tl. der Komponente B.

3. Formmassen gemäß Anspruch 1, worin das Pfropfpolymerisat B aus 30-80 Gew.-% B.1 und 20-70 Gew.-% B.2 hergestellt ist.

4. Formmassen gemäß Anspruch 1, in denen der Silikonkautschuk B.2 aus Polydiorganylsiloxaneinheiten mit den Organylresten α = Methyl, Ethyl; ß = Phenyl; γ = Vinyl, Allyl und δ = Mercaptopropyl besteht, wobei das Molverhältnis γ:δ = 2:1 bis 1:2 beträgt.

5. Formmassen gemäß Anspruch 1, dadurch gekennzeichnet, daß sie zusätzlich Stabilisatoren, Pigmente, Entformungsmittel, Flammschutzmittel, Füllstoffe, Verstärkungsstoffe und/oder Antistatika enthalten.

6. Verfahren zur Herstellung der Formmassen gemäß Anspruch 1, dadurch gekennzeichnet, daß man die Komponenten A, B und gegebenenfalls C sowie gegebenenfalls Stabilisatoren, Pigmente, Entformungsmittel, Flammschutzmittel, Füllstoffe, Verstärkungsstoffe und Antistatika in bekannter Weise vermischt und danach bei Temperaturen von 200 bis 350 °C in gebräuchlichen Aggregaten schmelzcompoundiert oder schmelzextrudiert.

7. Verwendung der Formmassen des Anspruchs 1 zur Herstellung von Formkörpern.